# NEW EUROPEAN PATENT SPECIFICATION

(11) **EP 0 240 367 B2**
(45) Date of publication and mention of the opposition decision: **05.01.2000**
(45) Mention of the grant of the patent: 27.12.1990
(21) Application number: 87302947.4
(22) Date of filing: 03.04.1987
(51) Int. Cl.: C09C 1/64, C09D 5/10, C09D 17/00

(54) **Aluminium pigment composition**
Aluminiumpigment-Zusammensetzung
Composition de pigment d'aluminium

(30) Priority: 04.04.1986 JP 7772886
(43) Date of publication of application: 07.10.1987
(73) Proprietor: TOYO ALUMINIUM KABUSHIKI KAISHA, Osaka-shi Osaka-fu (JP)
(72) Inventor: Kawabe, Tetsufumi, Yao-shi Osaka-fu (JP); Bamba, Toshiaki, Yamato-Koriyama-shi Nara-ken (JP); Matsufuji, Takashi, Yamato-Koriyama-shi Nara-ken (JP); Ueshimo, Hiroaki, Omihachiman-shi Shiga-ken (JP); Hashizume, Yoshiki, Kawachi-Nagano-shi Osaka-fu (JP); Uchimura, Eikichi, Yamato-Koriyama-shi Nara-ken (JP); Harada, Masakatsu, Yao-shi Osaka-fu (JP); Aoki, Masahiro, Kyoto-shi Kyoto-fu (JP); Kimura, Toru, Nara-shi Nara-ken (JP)
(74) Representative: Woods, Geoffrey Corlett

(56) References cited:
- EP-A- 0 206 615
- FR-A- 2 518 560
- US-A- 2 858 230
- US-A- 2 903 393
- US-A- 3 411 923
- US-A- 4 350 535
- US-A- 4 484 951
- US-A- 4 565 716

## Description

The invention relates to an aluminium pigment composition, particularly one suitable for incorporating in a water base paint such as a water-soluble paint or an aqueous emulsion paint.

Recently, water base paints have been extensively developed in many countries including Japan as a replacement for organic solvent base paints to save costs and resolve environmental pollution problems. In this connection, it has been desired to develop metallic pigments suitable for incorporating in the water base paints for surface coating automobiles and other vehicles to give them a good appearance.

As the metallic pigment for incorporating in the water base paint, a pigment composition comprising aluminium flakes and a surfactant, which is added to improve the water dispersibility, is known. However, this composition has the significant defect of evolving a large volume of hydrogen gas during prolonged storage. Thus an explosion may occur.

To overcome this, methods of forming anti-corrosive coatings on the aluminium flakes by adding an anti-corrosive material such as morpholine, a dimeric acid, an organic phosphate ester or a boric acid salt in addition to the surfactant have been proposed. However, these methods do not completely prevent the evolution of hydrogen gas. Furthermore, the coatings formed on the aluminium flakes cause another defect of darkening the colour tone characteristic of the metallic pigment, as well as aggregating the flakes during prolonged storage.

A method of contacting aluminium flakes with an aqueous solution containing available phosphate ions supplied from a phosphate compound such as (NH₄)₂HPO₄ in an amount of at least 0.7% by weight based on the aluminium weight and having a pH of about 1.5 to 11 is disclosed in US-A 2 858 230. A pigment composition obtained by this method can considerably prevent the evolution of hydrogen gas in the aqueous medium, but this composition cannot give a paint film with a satisfactory colour tone. Additionally this composition tends to gradually darken the colour tone with the evolution of the gas and to aggregate the flakes during storage.

The present invention provides an aluminium pigment composition obtainable by a process which comprises mixing together:
(i) aluminium flakes;
(ii) an inorganic oxo acid of phosphorus in an amount of from 500 to 10,000 ppm calculated as phosphorus based on the weight of the aluminium;
(iii) an aliphatic compound having from 8 to 40 carbon atoms and having at least one functional group within the molecule, the aliphatic compound being present in an amount of from 0.3 to 5 parts by weight per 100 parts by weight of the aluminium;
(iv) water in an amount of from 0.05 to 10 parts by weight per 100 parts by weight of the aluminium;
(v) a water-compatible alcohol in an amount of from 5 to 100 parts by weight per 100 parts by weight of the aluminium; and
(vi) a hydrocarbon oil in an amount of from 1 to 70 parts by weight per 100 parts by weight of the aluminium.

The present invention additionally provides a process for the preparation of an aluminium pigment composition, which process comprises mixing together:
(i) aluminium flakes;
(ii) an inorganic oxo acid of phosphorus in an amount of from 500 to 10,000 ppm calculated as phosphorus based on the weight of the aluminium;
(iii) an aliphatic compound having from 8 to 40 carbon atoms and having at least one functional group within the molecule, the aliphatic compound being present in an amount of from 0.3 to 5 parts by weight per 100 parts by weight of the aluminium;
(iv) water in an amount of from 0.05 to 10 parts by weight per 100 parts by weight of the aluminium;
(v) a water-compatible alcohol in an amount of from 5 to 100 parts by weight per 100 parts by weight of the aluminium; and
(vi) a hydrocarbon oil in an amount of from 1 to 70 parts by weight per 100 parts by weight of the aluminium.

This pigment composition can be incorporated in the water base paint without showing the above-mentioned defects. When incorporated in the water base paint, the pigment composition evolves a small volume of hydrogen gas and has little tendency to darken the colour tone and aggregate the flakes during prolonged storage.

The aluminium flakes usable in the invention are not particularly limited, but aluminium flakes having surface properties, size and form suitable for use as a metallic flake pigment are preferred. Generally, the aluminium flakes obtained by the so-called Hall process wherein the aluminium powder is subjected to grinding in a hydrocarbon oil in the presence of a grinding agent in a ball mill are used.

The aluminium flakes in the pigment composition according to the invention have thin and dense coatings containing phosphorus supplied from the inorganic oxo acid of phosphorus. The inorganic oxo acid of phosphorus usable in the invention may be at least one selected from ortho-phosphoric acid, pyrophosphoric acid, triphosphoric acid, tetraphosphoric acid and phosphorous acid.

The phosphorus content in the coating is from 500 to 10,000 ppm based on the weight of the aluminium. Preferably, the phosphorus content is from 1,000 to 7,000 ppm based on the aluminium weight. If the phosphorus content is less than 500 ppm a larger volume of hydrogen gas evolves, while if it is over 10,000 ppm the flakes may aggregate and the color tone may darken.

The aliphatic compound is used in the invention to prevent the aggregation of the flakes and is adsorbed or bound onto the coating. Therefore, the aliphatic compound used in the invention has at least one functional group within the molecule. The preferred functional groups are selected from:
-OH;
-COOR wherein R is a lower ( for example C₁ to C₅) alkyl group;
-COOM wherein M is an alkaline metal; 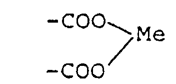 wherein Me is an alkali earth metal;
-CONH₂ ; 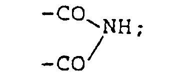 -NH₂;
〉NH; 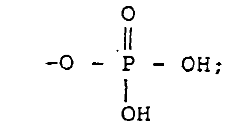 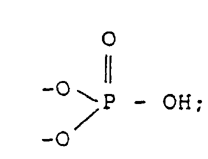 and

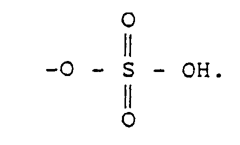

The aliphatic compound has from 8 to 40 carbon atoms. If a compound having 7 or less carbon atoms is used, aggregation of the flakes may not be prevented as desired since the carbon chains in the pendant residues adsorbed or bound to the coating are too short. If a compound having 41 or more carbon atoms is used, the handling is difficult since its molecular weight is too high. The aliphatic compound more preferably has at least one -NH₂ or >NH group. Examples of such aliphatic amines include 2-ethylhexylamine, caprylamine, decylamine, laurylamine, myristylamine, palmitylamine, stearylamine, oleylamine, eicosylamine, di-2-ethylhexylamine, dicaprylamine, didecylamine, dilaurylamine, dimyristylamine, dipalmitylamine, distearylamine, dioleylamine and dieicosylamine. Examples of other aliphatic compounds usable in the invention are an aliphatic higher alcohol such as lauryl alcohol and stearyl alcohol; an ester of an aliphatic acid with a lower alcohol such as methyl oleate and butyl stearate; a metal salt (e.g. Na, K, Mg, Ca or Zn) of an aliphatic acid; an aliphatic acid amide such as oleic amide, stearic amide and dilauric amide; and a mono- or diester of an aliphatic alcohol with orthophosphoric acid such as mono- or dilauryl acid phosphate and mono- or distearylacid phosphate.

The content of the aliphatic compound in the pigment composition according to the invention is from 0.3 to 5 parts by weight per 100 parts by weight of the aluminium. The content of the aliphatic compound is preferably from 1 to 4 parts by weight per 100 parts by weight of the aluminium. If the content is less than 0.3 parts by weight it is difficult to prevent aggregation of the flakes, while if it is over 5 parts by weight the color tone and the strength of the paint film may be adversely effected.

Water, the water-compatible alcohol and the hydrocarbon oil are essential in the invention to form the thin and dense coating. The content of water in the pigment composition according to the invention is from 0.05 to 10 parts by weight per 100 parts by weight of the aluminium. The content of water is preferably from 0.1 to 5 parts by weight per 100 parts by weight of the aluminium. If the content of water is outside of the above range, the desired coatings cannot be formed on the flakes. Thus evolution of hydrogen gas cannot be completely prevented and the problems of aggregation and change in color tone cannot be resolved.

The alcohol used in the invention is compatible with water and the hydrocarbon oil in a suitable ratio and completely dissolves the inorganic phosphoric acid. Examples of the water-compatible alcohol are ethanol, propanol, isopropanol, butanol, isobutanol, amylalcohol, isoamylalcohol, ethyl cellosolve, butyl cellosolve, polyoxyethylene glycol or a mixture of two or more thereof.

The content of the water-compatible alcohol in the pigment composition according to the invention is from 5 to 100 parts by weight per 100 parts by weight of the aluminium. The content of the alcohol is preferably from 20 to 40 parts by weight per 100 parts by weight of the aluminium. If the content is less than 5 parts by weight the desired coating cannot be formed, while if it is over 100 parts the pigment composition is unstable.

As the hydrocarbon oil, an aliphatic or aromatic hydrocarbon oil such as mineral spirit, solvent naphtha, HAWS or LAWS, which are used in the grinding of the aluminium powder for obtaining the aluminium flakes, can be used in the invention as is.

The content of the hydrocarbon oil is from 1 to 70 parts by weight per 100 parts by weight of the aluminium. The content of the hydrocarbon oil is preferably from 30 to 50 parts by weight per 100 parts by weight of the aluminium. If the content is less than 1 part by weight the pigment is unstable, while if it is over 70 parts by weight the coating is formed very slowly.

The pigment composition according to the invention desirably comprises a surfactant to improve the water dispersibility of the aluminium flakes in the water base paint, depending on the kind of paint. Among known surfactants, a nonionic surfactant is preferred, such as polyoxyethylene alkylphenol ether, polyoxyethylene alkyl ether, polyethylene glycol fatty acid ester, sorbitan fatty acid ester and polyoxyethylene sorbitan fatty acid ester. The effective content of the surfactant is from 5 to 20 parts by weight per 100 parts by weight of the aluminium.The inclusion of the surfactant may be unnecessary depending on the type of water base paint.

The pigment composition according to the invention may include other known additives such as a levelling agent, leafing stabilizer, thickener or inorganic or organic pigment. Examples of the organic pigments are anthraquinones such as flavanthrone yellow, indanthrone blue, dibromeanthanthrone red and anthrapyridine yellow, indigos, pyranthrones and perylenes. Examples of the inorganic pigments are phthalocyanine blue and titanium white.

The pigment composition according to the invention is particularly suitable for incorporating in a water base paint. The water base paint in which the composition is incorporated is not particularly limited. For example, the pigment composition according to the invention may be incorporated in a water-soluble paint or an aqueous emulsion paint which contains a polyester, acryl, alkyd, acryl-urethane, CAB, polyvinyl alcohol, polyvinyl acetate or ethylene-vinyl acetate resin. Of course, the pigment composition according to the invention can be incorporated in, for example, inks and adhesives.

### Examples:

The following Examples further illustrate the invention. Percentages are by weight unless otherwise stated.

### Examples 1 to 14 and Comparative Examples 1 to 6

A cake with an Aℓ content of 80% was prepared by removing a solvent from an aluminium paste pigment. The aluminium paste pigment used was a commercially available aluminium paste pigment (7160N, produced by TOYO ALUMINIUM K.K.) which essentially consists of aluminium flakes which pass through a 400 mesh screen (Tyler standard sieve ) and a mineral spirit, the Aℓ content of which is 65%. The thus-prepared cake contained an oleic acid used as a grinding agent in an amount of 1.5 parts by weight per 100 parts by weight of the aluminium.

The cake was transferred into a mixer and the inorganic phosphoric acid, the aliphatic compound, the nonionic surfactant, water, the water-compatible alcohol and the hydrocarbon oil shown in Table 1 were added thereto and kneaded for three hours to obtain an aluminium pigment paste composition.

The phosphor content and the water content in the thus-obtained composition were determined in accordance with the following methods. The results are also shown in Table 1.

### a) phosphor content

Each sample was washed with a mixed solvent of water and isopropanol and a mixed solvent of ether and acetone, successively and then dried to remove the solvent. Then, the sample was dissolved in an aqueous hydrochloric acid solution.

The phosphor (P) content (ppm) based on the aluminium weight was determined by plasma emission spectrophotometry.

### b) water content

The water in the sample was vaporized at 230°C in a N₂ gas flow and condensed.

The water content (parts by weight) per 100 parts by weight of the aluminium was determined by the Karl Fischer method using Moisture Meters VA-0.2 and CA-0.2 (produced by MITSUBISHI CHEMICAL INDUSTRIES LTD.).

### Example 15

The procedure of Example 10 was repeated to obtain a pigment composition with an Aℓ content of about 52%. The cake contained stearic acid as the grinding agent in an amount of 1.7 parts by weight per 100 parts by weight of the aluminium.

### Example 16

A pigment composition with an Aℓ content of about 52% was obtained in a similar manner to the procedure of Example 5. The cake contained lauryl amine as the grinding agent in an amount of 1.0 parts by weight per 100 parts by weight of the aluminium.

### Example 17

The water dispersibility, the aggregation amount, the gas volume evolved in the water base paint and the change in color tone of the paint film of each pigment obtained in the above Examples and Comparative Examples were determined in accordance with the following methods. The results are shown in Table 2.

### a) water dispersibility

A predetermined amount of the sample was added to pure water in the test tube. After stirring, the sample was allowed to stand.

The dispersibility in water was observed with necked eyes and evaluated as follows:
- ⓞ:: disperse easily and homogeneously
- o :: disperse almost homogeneously
- L :: almost leafing

### b) aggregation amount

The sample, after storing in a tank at 50°C for one month, was dispersed in water.

The weight of the sample not passing through a 325 mesh screen (Tyler standard sieve) was determined and expressed as a percentage based on the aluminium weight.

### c) gas volume

The water base paint used consisted of 21.3 g (calculated as aluminium) of the sample, 281.6 g of ALMATEX WA-911 ( produced by MITSUI TOATSU CHEMICALS, INC.), 44 g of CYMEL 350 ( produced by MITSUI TOATSU CHEMICALS, INC.), 7.1 g of phthalocyanine blue, 14.4 g of triethyl amine, 34.6 g of isopropanol and 448.0 g of water. Eighty grams of the above paint was transferred into a glass bottle and stored at 50°C for one month.

The total gas volume ( mℓ ) evolved during the storage was determined at room temperature.

### d) change in color tone

A blue metallic paint film was formed by coating the above paint in a 150 µm thick layer on a glass plate with a doctor blade and baking at 160°C for 20 minutes. As a control, a blue metallic paint film was formed in a similar manner using the untreated pigment obtained in Comparative Example 1.

The color difference ( ΔE ) of the paint film over the control paint film was determined with a color-difference meter with 45°- 0° manner.

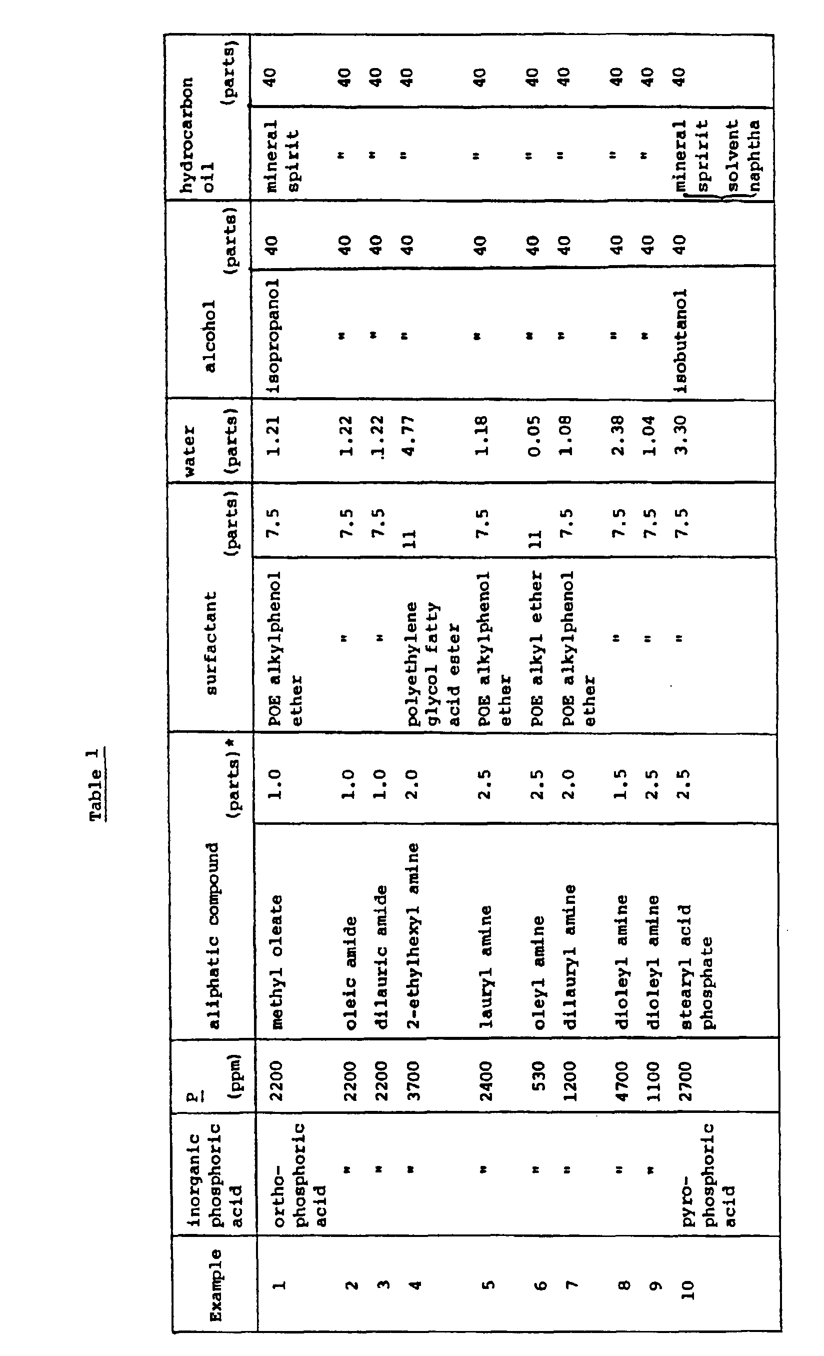

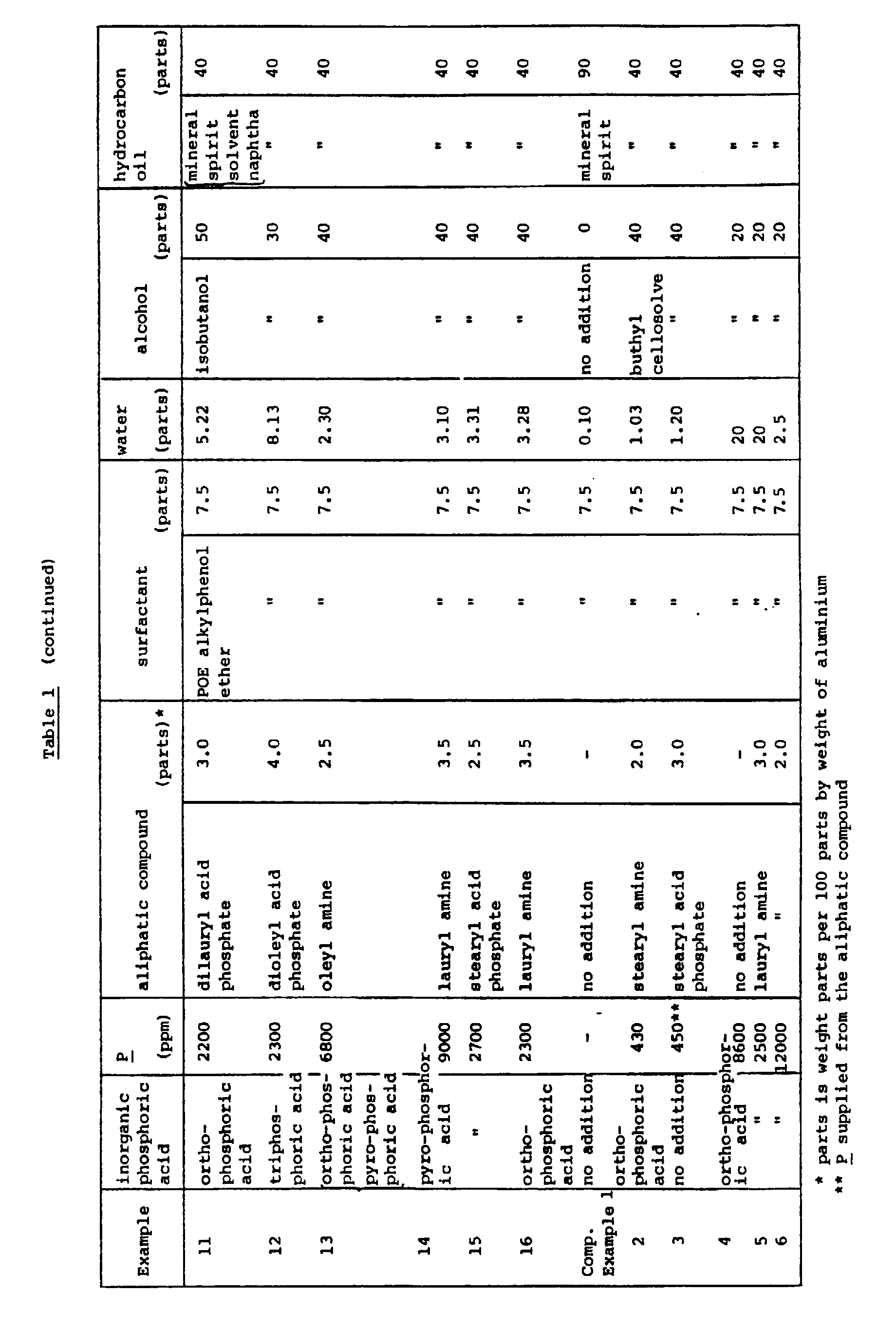

**Table 2**

| Examples & Comp. Examples | water dispersibility | aggregated amount (%) | gas volume (ml) | color difference (ΔE) |
|---|---|---|---|---|
| Ex. 1 | ⓞ | 0.05 | not more than 1 | 0.5 |
| 2 | ⓞ | 0.05 | " | 0.5 |
| 3 | ⓞ | 0.05 | " | 0.5 |
| 4 | ⓞ | 0.03 | " | 0.4 |
| 5 | ○ | 0.02 | " | 0.4 |
| 6 | ⓞ | 0.02 | " | 0.4 |
| 7 | ⓞ | 0.02 | " | 0.3 |
| 8 | ⓞ | 0.03 | " | 0.4 |
| 9 | ⓞ | 0.03 | " | 0.5 |
| 10 | L | 0.03 | " | 0.6 |
| 11 | ⓞ | 0.03 | " | 0.5 |
| 12 | ⓞ | 0.03 | 2 | 0.6 |
| 13 | ⓞ | 0.03 | not more than 1 | 0.5 |
| 14 | ⓞ | 0.03 | " | 0.5 |
| 15 | L | 0.03 | " | 0.5 |
| 16 | ○ | 0.03 | " | 0.5 |
| Comp. Ex. 1 | ⓞ | 0.02 | more than 50 | - |
| 2 | ⓞ | 0.02 | 48 | 0.3 |
| 3 | ○ | 0.6 | 5 | 2.5 |
| 4 | ○ | 5.5 | 2 | 12.5 |
| 5 | ⓞ | 7. 3 | more than 50 | 9.4 |
| 6 | ⓞ | 1.5 | 2 | 2.0 |

In the pigment composition according to the invention, thin and dense coatings are formed on the surfaces of aluminium flakes. The coatings are covered with large quantities of long pendant residues of the aliphatic compound since the functional groups in the aliphatic compound adsorb or bind on the surfaces of the aluminium flakes. Therefore, the pigment composition according to the invention has improved water dispersibility as well as little tendency to evolve a large volume of gas, aggregate the flakes and darken the color tone of the paint film. Registered trademarks are accordingly acknowledged.

## Claims

1. An aluminium pigment composition obtainable by a process which comprises mixing together:
(i) aluminium flakes;
(ii) an inorganic oxo acid of phosphorus in an amount of from 500 to 10,000 ppm calculated as phosphorus based on the weight of the aluminium;
(iii) an aliphatic compound having from 8 to 40 carbon atoms and having at least one functional group within the molecule, the aliphatic compound being present in an amount of from 0.3 to 5 parts by weight per 100 parts by weight of the aluminium;
(iv) water in an amount of from 0.05 to 10 parts by weight per 100 parts by weight of the aluminium;
(v) a water-compatible alcohol in an amount of from 5 to 100 parts by weight per 100 parts by weight of the aluminium; and
(vi) a hydrocarbon oil in an amount of from 1 to 70 parts by weight per 100 parts by weight of the aluminium.

2. A composition according to claim 1, wherein the aluminium flakes have been obtained by the Hall process.

3. A composition according to claim 1 to 2, wherein the inorganic oxo acid of phosphorus is ortho-phosphoric acid, pyro-phosphoric acid, triphosphoric acid, tetraphosphoric acid or phosphorous acid.

4. A composition according to any one of the preceding claims, wherein the phosphorus content is from 1,000 to 7,000 ppm based on the aluminium weight.

5. A composition according to any one of the preceding claims, wherein the aliphatic compound has at least one functional group selected from:
-OH;
-COOR wherein R is a lower alkyl group;
-COOM wherein M is an alkaline metal; 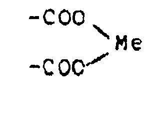 wherein Me is an alkaline earth metal;
-CONH₂; 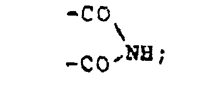 -NH₂;
〉NH ; 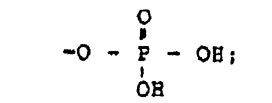 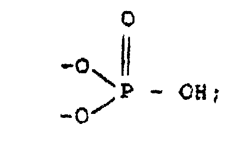 and

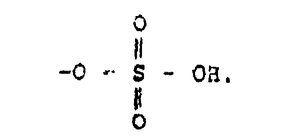

6. A composition according to claim 5, wherein the aliphatic compound is an aliphatic amine, an aliphatic higher alcohol, an ester of an aliphatic acid with a lower alcohol, a metal salt of an aliphatic acid, an aliphatic acid amide and a mono- or diester of an aliphatic alcohol with orthophosphoric acid.

7. A composition according to any one of the preceding claims, wherein the aliphatic compound is present in an amount of from 1 to 4 parts by weight per 100 parts by weight of the aluminium.

8. A composition according to any one of the preceding claims, wherein the water is present in an amount of from 0.1 to 5 parts by weight per 100 parts by weight of the aluminium.

9. A composition according to any one of the preceding claims, wherein the water-compatible alcohol is ethanol, propanol, isopropanol, butanol, isobutanol, amylalcohol, isoamylalcohol, ethyl cellosolve, butyl cellosolve, polyoxyethylene glycol, polyoxypropylene glycol or a mixture of two or more thereof.

10. A composition according to any one of the preceding claims, wherein the water-compatible alcohol is present in an amount of from 20 to 40 parts by weight per 100 parts by weight of the aluminium.

11. A composition according to any one of the preceding claims, wherein the hydrocarbon oil is an aliphatic or aromatic hydrocarbon oil.

12. A composition according to any one of the preceding claims, wherein the hydrocarbon oil is present in an amount of from 30 to 50 parts by weight per 100 parts by weight of the aluminium.

13. A composition according to any one of the preceding claims, which further comprises a surfactant.

14. A composition according to claim 13, wherein the surfactant is a nonionic surfactant.

15. A process for the preparation of an aluminium pigment composition, which process comprises mixing together:
(i) aluminium flakes;
(ii) an inorganic oxo acid of phosphorus in an amount of from 500 to 10,000 ppm calculated as phosphorus based on the weight of the aluminium;
(iii) an aliphatic compound having from 8 to 40 carbon atoms and having at least one functional group within the molecule, the aliphatic compound being present in an amount of from 0.3 to 5 parts by weight per 100 parts by weight of the aluminium;
(iv) water in an amount of from 0.05 to 10 parts by weight per 100 parts by weight of the aluminium;
(v) a water-compatible alcohol in an amount of from 5 to 100 parts by weight per 100 parts by weight of the aluminium; and
(vi) a hydrocarbon oil in an amount of from 1 to 70 parts by weight per 100 parts by weight of the aluminium.

## Patentansprüche

1. Aluminiumpigment-Zusammensetzung, erhältlich durch ein Verfahren, welches das Vermischen von
(i) Aluminiumflocken;
(ii) einer anorganischen Oxosäure des Phosphors in einer Menge von 500 bis 10 000 ppm, berechnet als Phosphor, bezogen auf das Gewicht des Aluminiums;
(iii) einer aliphatischen Verbindung mit 8 bis 40 Kohlenstoffatomen und mit mindestens einer funktionellen Gruppe innerhalb des Moleküls, wobei die aliphatische Verbindung in einer Menge von 0,3 bis 5 Gewichtsteilen pro 100 Gewichtsteile Aluminium vorliegt;
(iv) Wasser in einer Menge von 0,05 bis 10 Gewichtsteilen pro 100 Gewichtsteile Aluminium;
(v) einem wasserverträglichen Alkohol in einer Menge von 5 bis 100 Gewichtsteilen pro 100 Gewichtsteile Aluminium und
(vi) einem Kohlenwasserstofföl in einer Menge von 1 bis 70 Gewichtsteilen pro 100 Gewichtsteile Aluminium
umfaßt.

2. Zusammensetzung nach Anspruch 1, worin die Aluminiumflocken nach dem Hall-Verfahren hergestellt sind.

3. Zusammensetzung nach Anspruch 1 oder 2, worin die anorganische Oxosäure des Phosphors Orthophosporsäure, Pyrophosphorsäure, Triphosphorsäure, Tetraphosphorsäure oder-phosphorige Säure ist.

4. Zusammensetzung nach einem der vorangegangenen Ansprüche, worin der Phosphorgehalt 1000 bis 7000 ppm, bezogen auf das Gewicht des Aluminiums, beträgt.

5. Zusammensetzung nach einem der vorangegangenen Ansprüche, worin die aliphatische Verbindung mindestens eine funktionelle Gruppe, ausgewählt aus Gruppen der Formeln
-OH;
-COOR, worin R eine Niederalkylgruppe bedeutet;
-COOM, worin M ein Alkalimetall bedeutet: 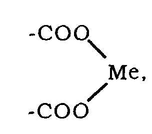 worin Me ein Erdalkalimetall bedeutet;
-CONH₂; 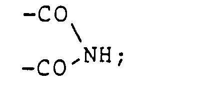 -NH₂;
〉NH; 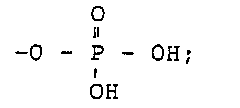 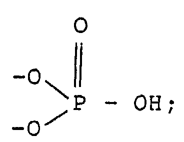 und 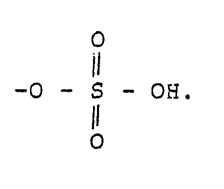 aufweist.

6. Zusammensetzung nach Anspruch 5, worin die aliphatische Verbindung ein aliphatisches Amin, ein aliphatischer höherer Alkohol, ein Ester einer aliphatischen Säure mit einem niederen Alkohol, ein Metallsalz einer aliphatischen Säure, ein aliphatisches Säureamid und ein Mono- oder Diester eines aliphatischen Alkohols mit Orthophosphorsäure ist.

7. Zusammensetzung nach einem der vorangegangenen Ansprüche, worin die aliphatische Verbindung in einer Menge von 1 bis 4 Gewichtsteilen pro 100 Gewichtsteile Aluminium vorliegt.

8. Zusammensetzung nach einem der vorangegangenen Ansprüche worin das Wasser in einer Menge von 0,1 bis 5 Gewichtsteilen pro 100 Gewichtsteile Aluminium vorliegt.

9. Zusammensetzung nach einem der vorangegangenen Ansprüche, worin der wasserverträgliche Alkohol Ethanol, Propanol, Isopropanol, Butanol, Isobutanol, Amylalkohol, Isoamylalkohol, Ethylcellosolve, Butylcellosolve, Polyoxyethylenglykol, Polyoxypropylenglykol oder eine Mischung aus zwei oder mehreren davon ist.

10. Zusammensetzung nach einem der vorangegangenen Ansprüche, worin der wasserverträgliche Alkohol in einer Menge von 20 bis 40 Gewichtsteilen pro 100 Gewichtsteile Aluminium vorliegt.

11. Zusammensetzung nach einem der vorangegangenen Ansprüche, worin das Kohlenwasserstofföl ein aliphatisches oder aromatisches Kohlenwasserstofföl ist.

12. Zusammensetzung nach einem der vorangegangenen Ansprüche, worin das Kohlenwasserstofföl in einer Menge von 30 bis 50 Gewichtsteilen pro 100 Gewichtsteile Aluminium vorhanden ist.

13. Zusammensetzung nach einem der vorangegangenen Ansprüche, worin diese weiterhin ein oberflächenaktives Mittel enthält.

14. Zusammensetzung nach Anspruch 14, worin das oberflächenaktive Mittel ein nicht-ionisches oberflächenaktives Mittel ist.

15. Verfahren zur Herstellung einer Aluminiumpigment-Zusammensetzung, welches Verfahren das Vermischen von
(i) Aluminiumflocken,
(ii) einer anorganischen Oxosäure des Phosphors in einer Menge von 500 bis 10 000 ppm, berechnet als Phosphor, bezogen auf das Gewicht des Aluminiums;
(iii) einer aliphatischen Verbindung mit 8 bis 40 Kohlenstoffatomen und mit mindestens einer funktionellen Gruppe innerhalb des Moleküls, wobei die aliphatische Verbindung in einer Menge von 0,3 bis 5 Gewichtsteilen pro 100 Gewichtsteile Aluminium vorliegt;
(iv) Wasser in einer Menge von 0,05 bis 10 Gewichtsteilen pro 100 Gewichtsteile Aluminium;
(v) einem wasserverträglichen Alkohol in einer Menge von 5 bis 100 Gewichtsteilen pro 100 Gewichtsteile Aluminium und
(vi) einem Kohlenwasserstofföl in einer Menge von 1 bis 70 Gewichtsteilen pro 100 Gewichtsteile Aluminium
umfaßt.

## Revendications

1. Composition de pigment d'aluminium pouvant être obtenue par un procédé consistant à mélanger ensemble :
(i) des paillettes d'aluminium ;
(ii) un oxacide minéral de phosphore en une quantité de 500 à 10 000 ppm, calculée en tant que phosphore, par rapport au poids de l'aluminium ;
(iii) un composé aliphatique de 8 à 40 atomes de carbone et présentant dans la molécule au moins un groupe fonctionnel, le composé aliphatique étant présent en une quantité de 0,3 à 5 parties en poids pour 100 parties en poids de l'aluminium ;
(iv) de l'eau en une quantité de 0,05 à 10 parties en poids pour 100 parties en poids de l'aluminium ;
(v) un alcool compatible avec l'eau, en une quantité de 5 à 100 parties en poids pour 100 parties en poids de l'aluminium ; et
(vi) une huile hydrocarbonée en une quantité de 1 à 70 parties en poids pour 100 parties en poids de l'aluminium.

2. Composition selon la revendication 1, dans laquelle les paillettes d'aluminium ont été obtenues par le procédé Hall.

3. Composition selon la revendication 1 ou 2, dans laquelle l'oxacide minéral de phosphore est l'acide orthophosphorique, l'acide pyrophosphorique, l'acide triphosphorique, l'acide tétraphosphorique ou l'acide phosphoreux.

4. Composition selon l'une quelconque des revendications précédentes, dans laquelle la teneur en phosphore est de 1000 à 7000 ppm par rapport au poids de l'aluminium.

5. Composition selon l'une quelconque des revendications précédentes, dans laquelle le composé aliphatique comporte au moins un groupe fonctionnel choisi parmi :
-OH ;
-COOR où R est un groupe alkyle inférieur;
-COOM où M est un métal alcalin ; 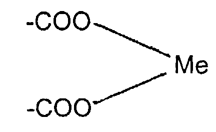 où Me est un métal alcalino-terreux;
-CONH₂; 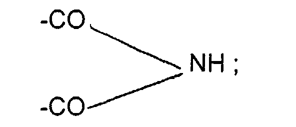 -NH₂ ;
〉NH ; 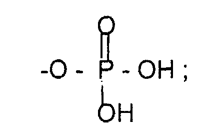 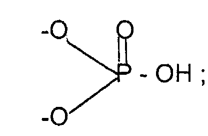 et

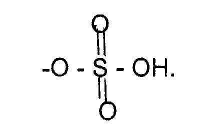

6. Composition selon la revendication 5, dans laquelle le composé aliphatique est une amine aliphatique, un alcool supérieur aliphatique, un ester d'un acide aliphatique avec un alcool inférieur, un sel de métal d'un acide aliphatique, un amide d'acide aliphatique et un mono- ou diester d'un alcool aliphatique avec l'acide orthophosphorique.

7. Composition selon l'une quelconque des revendications précédentes, dans laquelle le composé aliphatique est présent en une quantité de 1 à 4 parties en poids pour 100 parties en poids de l'aluminium.

8. Composition selon l'une quelconque des revendications précédentes, dans laquelle l'eau est présente en une quantité de 0,1 à 5 parties en poids pour 100 parties en poids de l'aluminium.

9. Composition selon l'une quelconque des revendications précédentes, dans laquelle l'alcool compatible avec l'eau est l'éthanol, le propanol, l'isopropanol, le butanol, l'isobutanol, l'alcool amylique, l'alcool isoamylique, l'Ethylcellosolve, le Butylcellosolve, un polyoxyéthylène-glycol, un polyoxypropylène-glycol ou un mélange de deux ou plusieurs d'entre eux.

10. Composition selon l'une quelconque des revendications précédentes, dans laquelle l'alcool compatible avec l'eau est présent en une quantité de 20 à 40 parties en poids pour 100 parties en poids de l'aluminium.

11. Composition selon l'une quelconque des revendications précédentes, dans laquelle l'huile hydrocarbonée est une huile hydrocarbonée aliphatique ou aromatique.

12. Composition selon l'une quelconque des revendications précédentes, dans laquelle l'huile hydrocarbonée est présente en une quantité de 30 à 50 parties en poids pour 100 parties en poids de l'aluminium.

13. Composition selon l'une quelconque des revendications précédentes, qui comprend de plus un agent tensio-actif.

14. Composition selon la revendication 13, dans laquelle l'agent tensioactif est un agent tensioactif non ionique.

15. Procédé pour la préparation d'une composition de pigment d'aluminium, lequel procédé consiste à mélanger ensemble :
(i) des paillettes d'aluminium ;
(ii) un oxacide minéral de phosphore en une quantité de 500 à 10 000 ppm, calculée en tant que phosphore, par rapport au poids de l'aluminium ;
(iii) un composé aliphatique de 8 à 40 atomes de carbone et présentant au moins un groupe fonctionnel, le composé aliphatique étant présent en une quantité de 0,3 à 5 parties en poids pour 100 parties en poids de l'aluminium ;
(iv) de l'eau en une quantité de 0,05 à 10 parties en poids pour 100 parties en poids de l'aluminium ;
(v) un alcool compatible avec l'eau, en une quantité de 5 à 100 parties en poids pour 100 parties en poids de l'aluminium ; et
(vi) une huile hydrocarbonée en une quantité de 1 à 70 parties en poids pour 100 parties en poids de l'aluminium.
